# DEMANDE DE BREVET EUROPEEN

(11) **EP 1 403 683 A1**
(43) Date de publication de la demande: **31.03.2004**
(21) Numéro de dépôt: 03291481.4
(22) Date de dépôt: 18.06.2003
(51) Int. Cl.: G02C 11/02

(54) **Monture de lunettes transformable et élement de transformation associé**

(30) Priorité: 30.09.2002 FR 0212143
(71) Demandeur: Tand'm S.a.r.l., 39800 Poligny (FR)
(72) Inventeur: Charmoille, Patricia, Cabinet Ballot, 25000 Besancon (FR)
(74) Mandataire: Bentz, Jean-Paul

(57) **Abrégé**

Lunettes (1) constituées par deux verres (2, 3) soutenus par une monture (4) comprenant deux branches latérales (5, 6) reliées à une face (7) sur laquelle est rapporté de manière amovible un élément (9) de transformation de l'aspect de ladite monture (4), par l'intermédiaire de moyens de fixation complémentaires, caractérisées en ce que ceux-ci sont constitués d'une part par au moins un pion (10) réalisé perpendiculairement à la face arrière de l'élément de transformation (9) et d'autre part par un logement (11) sensiblement correspondant réalisé perpendiculairement à une zone avant de la face (7) de la monture (4), le pion (10) et le logement (11) comportant des moyens de verrouillage également complémentaires.

## Description

La présente invention concerne une paire de lunettes constituée par deux verres soutenus par une monture comprenant deux branches latérales reliées entre elles par une face, au centre de laquelle est formé un nez.

Il est déjà connu des moyens de transformation de l'aspect de cette monture, de manière telle qu'avec une même paire de lunettes, on puisse transformer son apparence, à l'aide d'une monture différente à rapporter sur la monture de base.

Pour cela, il est connu de disposer d'au moins une face complète de couleur différente, à rapporter sur la monture d'origine afin de changer l'aspect de celle-ci.

Un inconvénient réside dans le fait, qu'une telle face amovible doit avoir une forme identique à la monture d'origine, car cette dernière se loge en fait dans des gorges internes de la monture optionnelle.

Dans de telles conditions, on comprend bien que seule la couleur peut être changée, la forme ne pouvant l'être en aucun cas.

Dès lors, les transformations d'aspect sont limitées.

Il a également été proposé par le passé de rapporter des montures auxiliaires sur des montures principales, comme par exemple pour transformer des lunettes de base en lunettes de soleil.

C'est ainsi que sont apparues des montures équipées de verres solaires, sans branche mais équipée de deux pinces, venant enserrer les verres des lunettes de base.

Le moins que l'on puisse dire est que ces lunettes ne sont pas d'un esthétisme heureux.

Il est également connu, des montures auxiliaires dont la fixation sur une monture principale est effectuée par des aimants.

Dans ce dernier cas, les parties métalliques sont montées sur l'une des montures en coïncidence avec des éléments magnétiques montés sur l'autre monture.

L'inconvénient, c'est que cela ne procure qu'une retenue en profondeur par rapport aux lunettes mais nullement dans un sens transversal, ni dans un sens longitudinal, ce qui provoque le déplacement de la monture auxiliaire dans l'un des deux sens précités, ce qui peut s'avérer fastidieux et inesthétique.

Il est également connu, de pouvoir réaliser des montures principales à partir d'une face partiellement constituée formant une base standard et en rapportant sur celle-ci pour la terminer, une pièce qui peut être d'une forme ou d'une autre.

Dans ce cas, la monture des lunettes de base ne peut pas être utilisée seule et nécessite toujours l'adjonction de la pièce de finition qui pourra être d'une forme ou d'une autre.

En aucun cas, selon ce dernier exemple, la monture de base pourra être utilisée seule tout en permettant sa transformation au gré de l'utilisateur.

La présente invention a pour but d'atteindre ce dernier résultat, tout en remédiant aux inconvénients précités et concerne à cet effet, des lunettes constituées par deux verres soutenus par une monture comprenant deux branches latérales reliées par l'intermédiaire de charnières à une face sur laquelle est susceptible d'être rapporté de manière amovible au moins un élément de transformation de l'aspect de ladite monture, par l'intermédiaire de moyens de fixation complémentaires disposés d'une part sur la face de la monture et d'autre part sur l'élément de transformation amovible. Ces lunettes se caractérisent en ce que ces moyens de fixation sont constitués d'une part par au moins un pion réalisé perpendiculairement à la face arrière de l'élément de transformation et d'autre part par un logement sensiblement correspondant réalisé perpendiculairement à une zone avant de la face de la monture, ou inversement, le pion et le logement comportant des moyens de verrouillage également complémentaires aptes à permettre une retenue positive dudit élément de transformation selon trois axes x, y, z perpendiculaires entre eux, ou son retrait.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue avant d'une face de monture d'une paire de lunettes selon l'invention assortie à un élément de transformation selon un premier exemple de réalisation avant montage de celui-ci.
La figure 2 est une vue selon la figure 1 d'une monture de lunettes et d'un élément de transformation selon la figure 1 après montage.
Les figures 3, 4 et 5 représentent respectivement, en coupe partielle, selon un premier exemple de réalisation par clip, un élément de transformation et une paire de lunettes, avant, pendant et après montage.
La figure 6 est une vue en plan à échelle agrandie d'un clip constituant une partie des moyens de fixation selon l'exemple des figures 3, 4 et 5.
La figure 7 est une vue en bout à échelle agrandie de l'extrémité libre du clip, selon la figure 6.
La figure 8 est une vue en plan à échelle agrandie, partiellement en coupe, d'une douille constituant l'autre partie des moyens de fixation selon l'exemple des figures 3, 4, 5 destinée à coopérer avec le clip.
La figure 9 est une vue de dessus à échelle agrandie de la douille, selon la figure 8.
La figure 10 est une vue en coupe transversale d'une partie de la monture montrant des moyens de fixation magnétique d'un élément de transformation sur une monture, selon un second mode de réalisation, dans le cadre d'une monture en matière en plastique.
La figure 11 est une vue en coupe transversale d'une partie de la monture montrant des moyens de fixation magnétique d'un élément de transformation sur une monture, selon un second mode de réalisation, dans le cadre d'une monture métallique de base, unique.
Les figures 12 à 16 représentent des variantes de réalisation d'élément de transformation de l'aspect d'une monture.

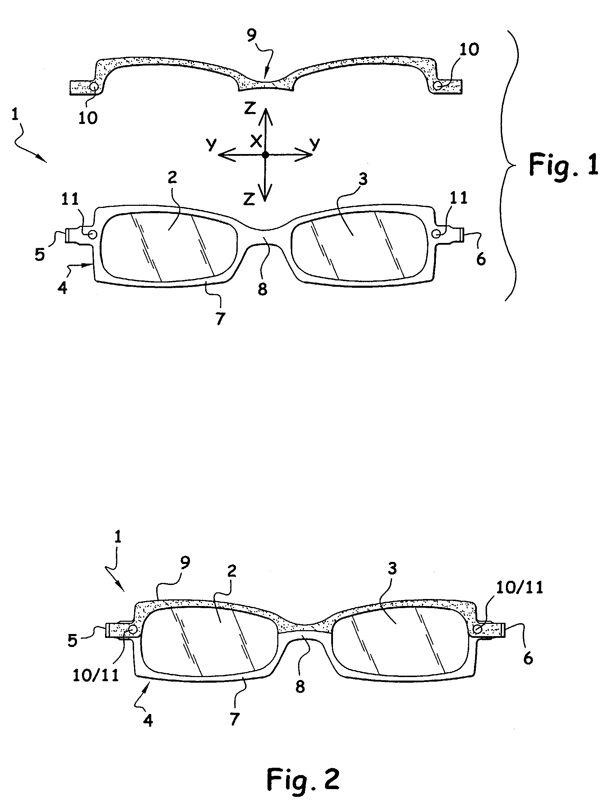

La paire de lunettes 1 représentée sur les figures 1 et 2 est constituée de manière connue par deux verres 2 et 3 soutenus par une monture 4 comprenant deux branches latérales 5 et 6 reliées entre elles par une face 7 au centre de laquelle est formé un nez 8.

Bien entendu, les plaquettes pourraient également être rapportées directement sur la monture entourant les verres ou obtenues par moulage avec ladite monture, celle-ci étant, dans ce cas, en matière plastique, bien entendu.

Selon le présent exemple de réalisation de l'invention, les lunettes 1 désignées dans leur ensemble, représentées sur les figures 1 et 2 sont susceptibles de recevoir de manière amovible un élément de transformation 9 de l'aspect de ladite monture 4, par l'intermédiaire de moyens de fixation complémentaires, disposés d'une part sur la face 7 de la monture 4 et d'autre sur l'élément de transformation amovible 9.

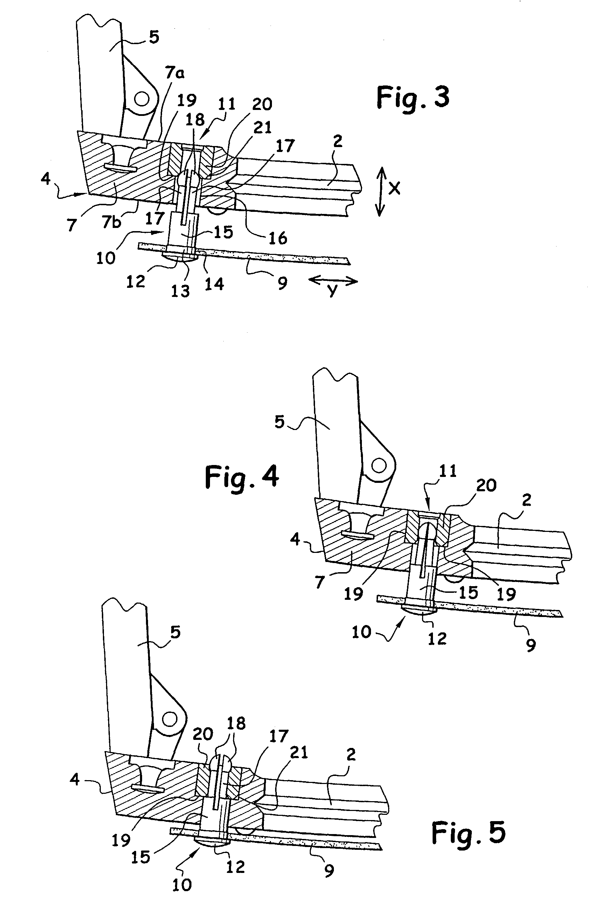

Selon l'exemple de réalisation des figures 3 à 9, ces moyens de fixation sont constitués d'une part par au moins un pion 10 réalisé perpendiculairement à la face arrière de l'élément de transformation 9 et d'autre part par un logement 11 sensiblement correspondant réalisé perpendiculairement à une zone avant de la face 7 de la monture 4, ou inversement. Le pion 10 et le logement 11 comportent des moyens de verrouillage également complémentaires aptes à permettre une retenue positive dudit élément de transformation 9 selon trois axes x, y, z perpendiculaires entre eux, ou son retrait.

Avantageusement, le pion 10 est solidaire de l'élément de transformation 9 et est constitué par un clip déformable élastiquement de dimensions et de formes telles à coopérer au montage avec le logement 11, de dimensions sensiblement correspondantes, réalisé sur la face 7 de la monture 4 selon un positionnement adéquat.

Selon un exemple concret de réalisation particulièrement bien visible sur les figures 3 à 5, 6 et 7, le clip 10 comprend une tête d'appui 12 destinée à venir en butée sur la face externe de l'élément de transformation 9 se prolongeant axialement, selon un diamètre réduit, par une première partie d'emmanchement 13 dans un trou correspondant 14 dudit élément 9 et par une seconde partie successive de coulissement 15 dans un logement correspondant 16 de la face 7 de la monture 4. Ladite partie de coulissement 15 se prolonge elle-même par au moins deux bras 17 déformables élastiquement, s'étendant axialement et dont les dimensions longitudinales et transversales les rendent aptes à coopérer en retenue avec le logement 11 de la face de la monture 4.

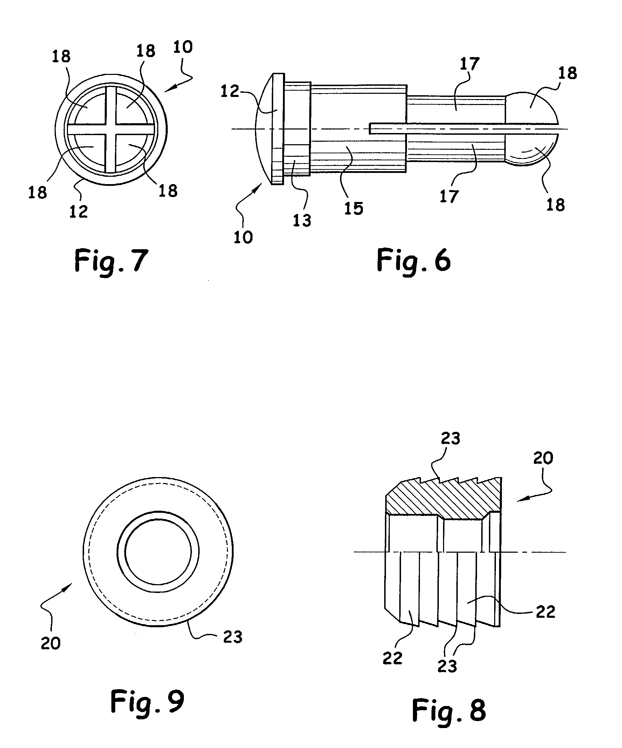

En l'occurrence, le clip 10 comporte quatre bras 17 déformables élastiquement réalisés perpendiculairement les uns par rapport aux autres dans un sens transversal, comme le montre la figure 7.

Les bras 17, déformables élastiquement, du clip 10, comportent à leurs extrémités libres des parties 18 offrant des contours extérieurs partiellement sphériques, de dimensions transversales supérieures à celles du logement 11 de la face 7 de la monture 4, de manière à la traverser en se déformant et à y être retenu, après en avoir débouché, en reprenant leur forme initiale.

En ce qui concerne le logement 11, celui-ci est réalisé dans la face de la monture 4 et comporte une partie élargie 21 de dimensions transversales plus importantes du côté interne 7a de la face 7 de la monture 4, que du côté externe 7b de celle-ci, réalisant ainsi un épaulement périphérique interne 19 au logement 11 contre lequel vient en butée un insert de renforcement 20 engagé à force ou collé dans la partie élargie 21 du logement 11 et venant à fleur du côté interne 7a de la face 7 de la monture 4.

Préférentiellement, comme bien visible à la figure 8, l'insert 20 est constitué par un manchon dont les dimensions internes correspondent sensiblement à celles de la section des bras 17 du clip 10, alors que ses dimensions externes sont supérieures à celles de la partie élargie 21 du logement 11 de la face 7 de la monture 4 destinée à le recevoir, de manière à permettre l'engagement à force de l'insert 20, d'où sa retenue sur la monture 4.

Comme le montre particulièrement bien la figure 8, l'insert 20 comprend sur sa périphérie externe une succession de zones tronconiques 22 superposées dans le sens de l'emmanchement, offrant par leur grande base autant de dents d'ancrage 23 dans le logement 11 de la face de la monture.

Selon le présent exemple de réalisation, le pion 10 solidaire de l'élément de transformation 9, ainsi que l'insert 20 solidaire de la monture 4 sont métalliques, alors que ledit élément 9, et/ou la face 7 de la monture 4 sont en matière plastique.

Dans ce cas, le pion 10 et l'insert 20 sont en acier inoxydable.

Bien entendu, le pion ou clip 10 pourraient être réalisés en matière plastique et la monture pourrait s'affranchir de l'insert 20 si elle était métallique.

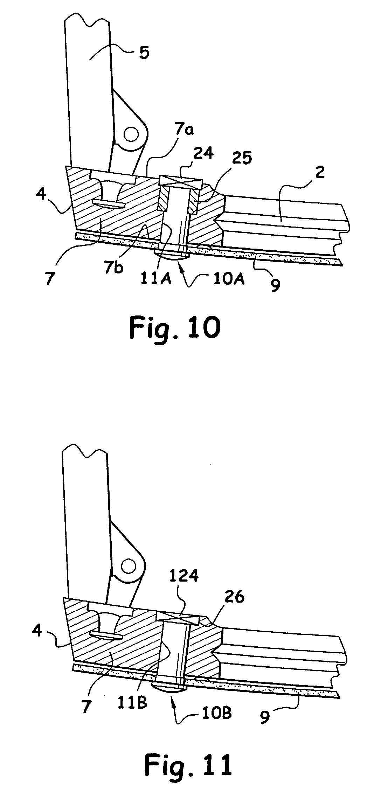

Selon un autre exemple de réalisation des moyens de fixation représentés sur les figures 10 et 11, le pion 10A est solidaire de l'élément de transformation 9 et est constitué par un plot ou manchon métallique de dimensions et de formes telles à coopérer de manière coulissante avec un logement correspondant 11A réalisé sur la face 7 de la monture 4 selon un positionnement adéquat et au fond duquel, du côté interne 7a de ladite face 7, est inséré à force ou collé, un élément magnétique 24. Celui-ci est destiné à assurer la retenue du pion 10A d'où de l'élément de transformation 9 dans le sens de la profondeur, la retenue dans le sens longitudinal et dans le sens transversal étant assurée par l'introduction même du pion 10A dans le logement 11A.

Plus particulièrement, comme représenté sur la figure 10, dans le cas d'une monture en matière plastique, le logement 11A reçoit dans sa partie d'extrémité dirigée vers la partie arrière 7a de la face 7 un insert métallique 25 du type décrit ci-dessus, de manière à renforcer la matière plastique de la monture 4, dans ce cas, il sera d'une hauteur inférieure à l'exemple de réalisation décrit précédemment de manière à ménager un logement à l'élément magnétique 24 qui sera rapporté par l'arrière de la monture.

Par contre, selon l'exemple de la figure 11, dans le cas d'une monture métallique, il n'est pas nécessaire de recourir à l'insert 25 précédemment décrit, car la rigidité de la monture se suffit à elle-même.

Dans ce cas, le pion 10B pourrait être constitué par un cylindre de diamètre uniforme dont le fond plat coopèrera avec l'élément magnétique 24 inséré dans un logement 26 de diamètre plus important que celui du pion 10B.

Toujours selon l'exemple de la figure 11, l'élément 24 affleure la partie arrière 7a de la face 7 de la monture 4.

Pour des questions de facilité de réalisation, le pion 10, 10A ou 10B et son logement 11, 11A, 11B ainsi que leurs parties constitutives sont de sections circulaires et sont disposés symétriquement de part et d'autre de la monture et de l'élément de transformation.

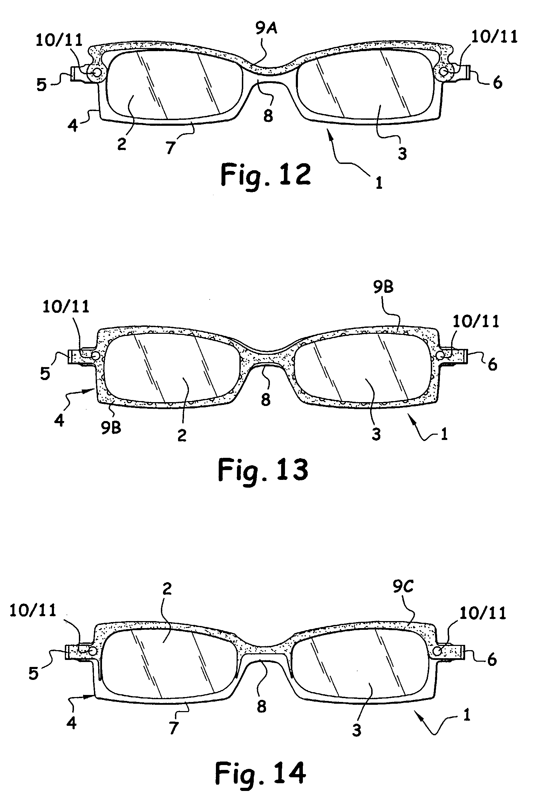

Comme le montre les figures 12 à 16, l'élément de transformation 9, 9A, 9B, 9C, 9D, 9E de la monture 4 est constitué selon un choix de l'utilisateur, par une demi-face inférieure, une demi-face supérieure, une face complète avec des verres solaires ou non, un décor ponctuel ou double.

En l'occurrence, la figure 12 représente un élément de transformation 9A constitué par une demi-face supérieure d'un certain style.

En ce qui concerne la figure 13, on y voit un élément de transformation 9B constitué par une face complète pouvant ainsi changer la forme complète ou la couleur d'une monture de base.

En ce qui concerne la figure 14, celle-ci montre un élément de transformation 9C constitué par une demi-face supérieure apte à supporter des verres solaires.

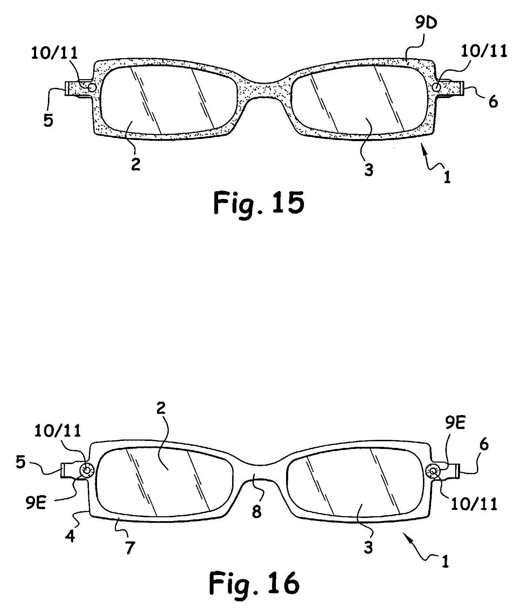

Il en est de même pour la figure 15 où l'élément de transformation 9D est constitué par une face complète supportant également les verres solaires.

En ce qui concerne la figure 16, on y voit des éléments de transformation 9E, qui sont en fait des éléments de décor ponctuels et situés de part et d'autre de la monture et pouvant être constitués par tout motif, tel que fleur, insecte, brillant etc......

Bien entendu, bien que non représenté, l'élément de transformation pourrait être constitué par une demi-face inférieure de tous styles, de toutes formes et de toutes couleurs.

## Revendications

1. Lunettes (1) constituées par deux verres (2, 3) soutenus par une monture (4) comprenant deux branches latérales (5, 6) reliées par l'intermédiaire de charnières à une face (7) sur laquelles est susceptible d'être rapporté de manière amovible au moins un élément (9) de transformation de l'aspect de ladite monture (4), par l'intermédiaire de moyens de fixation complémentaires disposés d'une part sur la face (7) de la monture (4) et d'autre part sur l'élément de transformation amovible (9), **caractérisées en ce que** ces moyens de fixation sont constitués par au moins un pion (10) formé par un clip déformable élastiquement, réalisé perpendiculairement à la face arrière de l'élément de transformation (9) dont il est solidaire, les dimensions et la forme dudit clip sont telles à coopérer au montage avec un logement (11) de dimensions sensiblement correspondantes, réalisé perpendiculairement à une zone avant de la face (7) de la monture (4), ou inversement, selon une position adéquate, le pion (10) et le logement (11) comportant des moyens de verrouillage également complémentaires, aptes à permettre une retenue positive dudit élément de transformation (9), selon trois axes (x, y, z) perpendiculaires entre eux, ou son retrait.

2. Lunettes (1) selon la revendication 1, **caractérisées en ce que** le clip (10) comprend une tête d'appui (12) destinée à venir en butée sur la face externe de l'élément de transformation (9) se prolongeant axialement, selon un diamètre réduit, par une première partie d'emmanchement (13) dans un trou correspondant (14) dudit élément (9) et par une seconde partie successive de coulissement (15) dans un logement correspondant (16) de la face (7) de la monture (4), ladite partie de coulissement (15) se prolongeant elle-même par au moins deux bras (17) déformables élastiquement, s'étendant axialement et dont les dimensions longitudinales et transversales les rendent aptes à coopérer en retenue avec le logement (11) de la face de la monture (4).

3. Lunettes (1) selon la revendication 2, **caractérisées en ce que** les bras (17) déformables élastiquement du clip (10) comportent à leurs extrémités libres des parties (18) offrant des contours extérieurs partiellement sphériques, de dimensions transversales supérieures à celles du logement (11) de la face (7) de la monture (4), de manière à la traverser en se déformant et à y être retenu, après en avoir débouché, en reprenant leur forme initiale.

4. Lunettes (1) selon l'une des revendications 1 à 3, **caractérisées en ce que** le logement (11) réalisé dans la face de la monture (4) comporte une partie élargie (21) de dimensions transversales plus importantes du côté interne (7a) de la face (7) de la monture (4), que du côté externe (7b) de celle-ci, réalisant ainsi un épaulement périphérique interne (19) au logement (11) contre lequel vient en butée un insert de renforcement (20) engagé à force dans la partie élargie (21) du logement (11) et venant à fleur du côté interne (7a) de la face (7) de la monture (4).

5. Lunettes (1) selon la revendication 4, **caractérisées en ce que** l'insert (20) est constitué par un manchon dont les dimensions internes correspondent sensiblement à celles de la section des bras (17) du clip (10) alors que ses dimensions externes sont supérieures à celles de la partie élargie (21) du logement (11) de la face (7) de la monture (4) destinée à le recevoir, de manière à permettre l'engagement à force de l'insert (20) d'où sa retenue sur la monture (4).

6. Lunettes (1) selon la revendication 5, **caractérisées en ce que** l'insert (20) comprend sur sa périphérie externe une succession de zones tronconiques (22) superposées dans le sens de l'emmanchement, offrant par leur grande base autant de dents d'ancrage (23) dans le logement (11) de la face de la monture.

7. Lunettes (1) selon l'une des revendications 4 à 6, **caractérisées en ce que** le pion (10) solidaire de l'élément de transformation (9), ainsi que l'insert (20) solidaire de la monture (4) sont métalliques, alors que ledit élément (9), et/ou la face (7) de la monture (4) sont en matière plastique.

8. Lunettes (1) selon l'une des revendications 1 à 7, **caractérisées en ce que** le pion (10, 10A, 10B) et son logement (11, 11A, 11B) ainsi que leurs parties constitutives sont de sections circulaires et sont disposés symétriquement de part et d'autre de la monture et de l'élément de transformation.

9. Lunettes (1) selon l'une des revendications 1 à 8, **caractérisées en ce que** l'élément de transformation (9, 9A, 9B, 9C, 9D, 9E) de la monture (4) est constitué selon un choix de l'utilisateur, par une demi-face inférieure, une demi-face supérieure, une face complète avec des verres solaires ou non, un décor ponctuel ou double.
